# EUROPEAN PATENT APPLICATION

(11) **EP 2 905 567 A1**
(43) Date of publication of application: **12.08.2015**
(21) Application number: 13844027.6
(22) Date of filing: 22.08.2013
(51) Int. Cl.: F26B 3/28, A23B 9/08, F26B 9/06

(54) **ECO-SUSTAINABLE DRYER FOR AGRICULTURAL PRODUCE**

(30) Priority: 02.10.2012 ES 201231525
(71) Applicant: Resa Rodrigo, Benito, 31513 Arguedas, Navarra (ES)
(72) Inventor: Resa Rodrigo, Benito, 31513 Arguedas, Navarra (ES)
(74) Representative: Carvajal y Urquijo, Isabel
(86) International application number: PCT/ES2013/070607
(87) International publication number: WO 2014/053682

(57) **Abstract**

An eco-sustainable dryer for agricultural products, made up of an enclosure (1) comprising an exposure surface (20) for exposing the product to be treated and means for collecting solar radiation, which consist of mirrored panels (4) mounted between upper (6) and lower (7) horizontal rails and including sets of mirrors (12) that rotate about two perpendicular shafts (11 and 13).

## Description

### Field of the invention

The present invention relates to an eco-sustainable dryer for agricultural products and is particularly designed for drying cereal and seeds in general. The dryer of the invention is of the variety made up of an enclosure, through the roof of which the sun's rays may penetrate and which comprises an exposure surface for exposing the product to be dried, means for collecting the sun's radiation that penetrates through the roof, means for supplying hot air inside the enclosure and means for stirring and mixing the grain spread on the exposure surface.

### Background of the invention

Dryers for drying agricultural products, such as cereal and seeds in general, of the variety set out above, are already known about in the state of the art.

WO9007685 describes a dryer made up of an enclosure provided with a mobile cover, which when removed, enables the sun's rays to directly hit the product to be dried, located inside the enclosure. Drying is furthermore accelerated by means of a current of air, which passes through the materials to be dried.

Meanwhile, FR2602395 makes known a dryer that comprises an enclosure provided with a fixed yet transparent cover, which enables the sun's rays to pass through into the inside of the enclosure, until it reaches the product exposed in order to dry it. The dryer also includes means for making air circulate through the product to be dried, it being possible for this air to be heated up using traditional heating means.

In all cases, drying is achieved due to the sun's rays hitting the product to be dried directly, in addition to the effects of a current of air being made to pass through said product, it being possible to use air at room temperature or air heated using heating means.

However, the systems set out above do not make it possible to derive maximum benefit from the heat energy of the sun's rays that hit the dryer, as a result of variation in the direction and angle in which said rays fall throughout the day.

Moreover, making a current of air pass through the product to be dried is not maximally effective if the air circulates at room temperature and should it be heated with traditional heating means, this constitutes a considerable increase in the cost of the drying process.

### Description of the invention

The present invention aims to eliminate the problems set out by means of a dryer of the variety initially mentioned, but provided with means that make it possible to achieve maximum heat energy capture of solar radiation and to derive maximum benefit thereof in drying operations, both by means of the use thereof or direct action on the product to be dried and in the use thereof as a heating means for heating a current of air that is introduced into the dryer enclosure.

As already mentioned, the dryer of the invention is of the variety made up of an enclosure, through the cover of which the sun's rays may penetrate. This effect may be achieved by means of a mobile cover or by means of a fixed cover of a transparent nature. The dryer furthermore includes an exposure surface, upon which the product to be dried is extended, means for supplying hot air inside the enclosure, and means for stirring and mixing the product to be dried.

According to the invention, the dryer is provided with means for collecting solar radiation which hits the dryer, these means consisting of mirrored panels that define the inner surface of at least one of the walls of the enclosure. These panels are mounted between upper and lower horizontal rails and may move along the length of the same. The panels include sets of mirrors that may rotate about two perpendicular shafts contained on the plane of said mirrors, which facilitate the orientation thereof so as to achieve maximum capture of the sun's rays at all time, in addition to the reflection thereof towards the grain exposure surface.

The mirrored panels may cover the inner surface of just one of the walls of the enclosure, of two walls and preferably of three walls of the enclosure, the inner surface of each one of these walls being designed to collect the sun's rays during the morning, at mid-day and in the evening.

The enclosure may also lack one, two or all of the walls, being delimited by mirrored panel bearing sculptures, upon which covering means may be mounted, the same being defined by a fixed transparent cover or a mobile cover, for example.

With the abovementioned make-up, the product to be dried, extended on the exposure surface of the dryer, will on the one hand receive the direct action of the sun's rays hitting said surface, and on the other hand, receive the reflection of the sun's rays hitting the mirrors.

Each mirrored panel may be made up of a first outer frame, which is preferably rectangular in shape, upon which the at least one second inner frame is mounted, the same also being rectangular and serving to bear the mirrors. Two second inner rectangular parallel frames may be mounted inside the first outer frame.

In any case, the first inner frame is mounted between the upper and lower rails through rolling means. In turn, the second inner frame is mounted in the first outer frame by means of a first rotation shaft, parallel to one of the sides of the first outer frame. Each mirror is mounted in the second inner frame through a second rotation shaft, perpendicular to the first rotation shaft mentioned above.

In the event of two second inner frames being mounted in each first frame, the same is rectangular in shape and parallel and is mounted in the first outer frame through other several first rotation shafts, parallel to one another.

Each panel would furthermore bear actuation mechanisms for actuating the second inner frames and the mirrors, in order to achieve the most suitable orientation for maximum capture of the sun's rays at all times, in addition to the reflection thereof on the exposure surface for exposing the product to be dried. These mechanisms will furthermore include interlocking means, in order to ensure the position of the second frames and mirrors in any orientation.

### Through

The dryer of the invention is also provided with means for supplying hot air inside the enclosure, these means comprising a heating chamber with transparent walls, a set of concave mirrors orientated such that they reflect the sun's rays towards the inside of the heating chamber and a piece of air supply equipment, capable of making air circulate through said chamber and driving it to the inside of the enclosure.

Finally, in the dryer of the invention, the means for stirring and mixing the product to be dried are made up of at least one comb, which is suspended above the grain exposure surface, parallel to the same and may move along the length of the dryer. This comb bears lower stirring arms or trowels, which extend to the edges of the exposure surface. At least the lower section of these arms or trowels is preferably made of an elastically flexible material, in order to prevent wear on the exposure surface of the dryer.

### Brief description of the drawings

The drawings attached provide a non-limiting exemplary illustration of a dryer made in accordance with the invention, wherein:
Figure 1 is a schematic perspective view of a dryer made in accordance with the invention.
Figure 2 is a front elevation view of one of the mirrored panels defining one or more of the walls of the dryer shown in Figure 1.
Figure 3 is a similar view to that shown in figure 2, with the mirrors of the mirrored panels being oriented so that they achieve maximum capture of the sun's rays and the reflection thereof towards the exposure surface of the dryer.
Figure 4 is a schematic perspective view of the means for supplying hot air to the inside of the dryer.
Figure 5 is a perspective view of the means for stirring and mixing the product to be dried, located on the exposure surface of the dryer.
Figure 6 is a detailled perspective view of one of the arms or trowels of the means for stirring and mixing the product to be dried, shown in figure 6.

### Detailled description of one embodiment

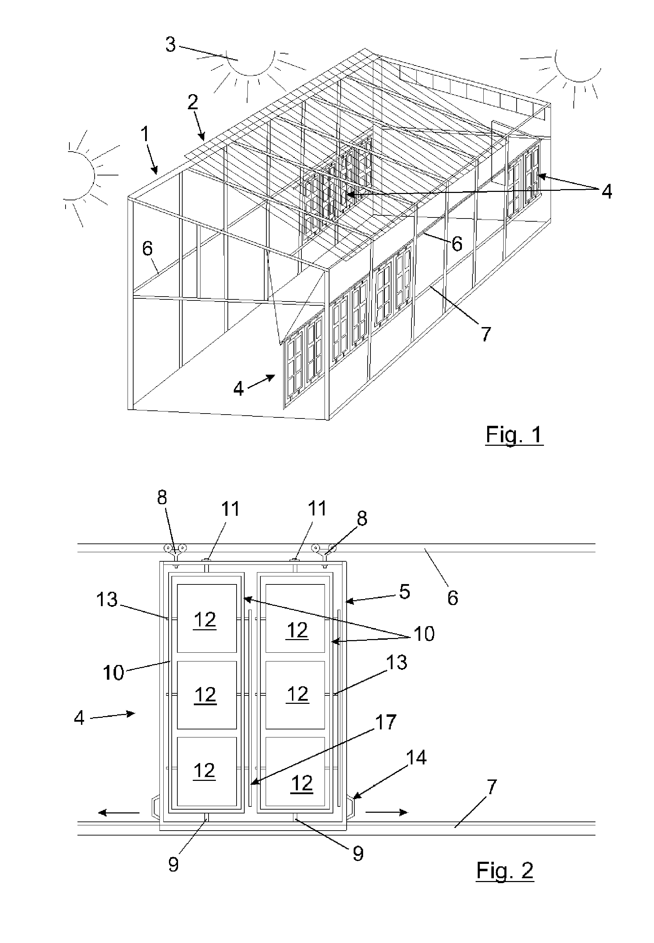

Figure 1 shows a dryer made up of an enclosure, represented by the structure 1 of the same. This enclosure comprises an upper mobile cover 2, which facilitates the complete opening of the roof, so as to enable the sun's rays 3 to penetrate into the inside the enclosure 1.

At least one of the walls of the enclosure 1 and preferably three of said walls are made up of mirrored panels 4, at least on the inner surface thereof, the enclosure 1 being built in such a way that the inner surface of the three mirrored panel 4 bearing walls receives the maximum amount of the sun's rays, one of the walls doing so in the morning, another at mid-day and the third in the evening.

Figure 2 is a front elevation view of one of the mirrored panels 4, which is made up of a first outer frame 5 mounted between upper 6 and lower 7 rails through rolling means 8 and 9. The first outer frame 5 is suspended from the upper rail 6 through the rolling means 8 and is supported on the lower rail 7 through the rolling means 9.

The first outer frame 5 is rectangular in shape and two second inner frames 10, which are also rectangular and parallel to one another, are arranged inside the same, each one being mounted on the first outer frame 5 through a first rotation shaft 11, the two first rotation shafts 11 being parallel to one another and at one of the sides of the first outer frame 5.

In each second inner frame 10, mirrors 12 are mounted, each one of which is mounted by means of a second rotation shaft 13 that is perpendicular to the first rotation shaft 11.

The first outer frame 5 may be provided with handles 14 in order to facilitate the movement of the same between the upper 6 and lower 7 rails.

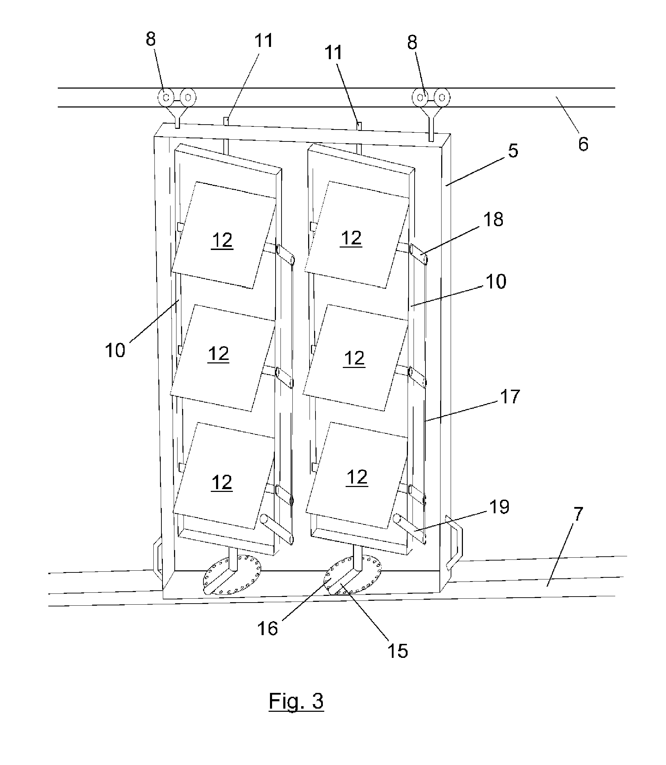

In turn, the second inner frames 10 and the mirrors 12 are provided with actuation mechanisms in order to orient the same, as can be better observed in figure 3.

Each second frame 10 may be provided with a lower actuation lever 15, through which the second inner frame 10 may rotate about the first rotation shaft 11, the mechanism including a plate 16 with interlocking points, in order to fix the position of the lever 15 at any orientation selected on the second inner frame 10.

In turn, the mirror orientation mechanism 12 may consist of a rod 17 mounted along the length of one of the sides of the second inner frame 10, linked to the rotation shaft of the mirrors 12 through connecting rods 18, thereby foiming an espagnolette bolt type mechanism with an actuation lever 19 with which to cause the longitudinal movement of the rod 17 and thereby, the rotation and orientation of the mirrors 12.

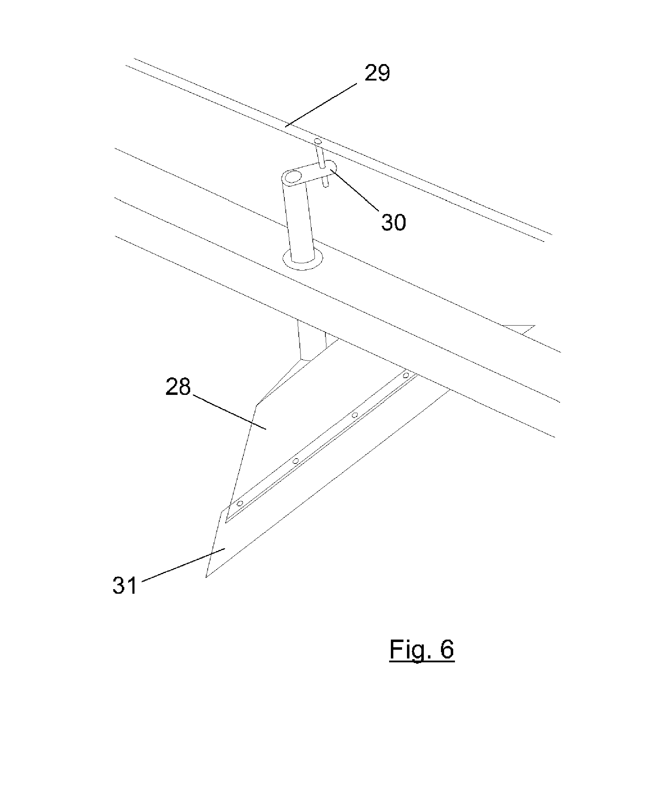

With the aforementioned make-up, the mirrored panels 4 may be moved between the upper 6 and lower 7 guides, through the rolling means 8 and 9. In turn, the second frames 10 may be oriented on the first rotation shaft 11, while the mirrors 12 may be oriented on the second rotation shaft 13, in order to be able to achieve maximum capture of the sun's rays at all times, in addition to the reflection thereof towards the surface for exposing the product to be dried, as shall be set out below with reference to figure 6.

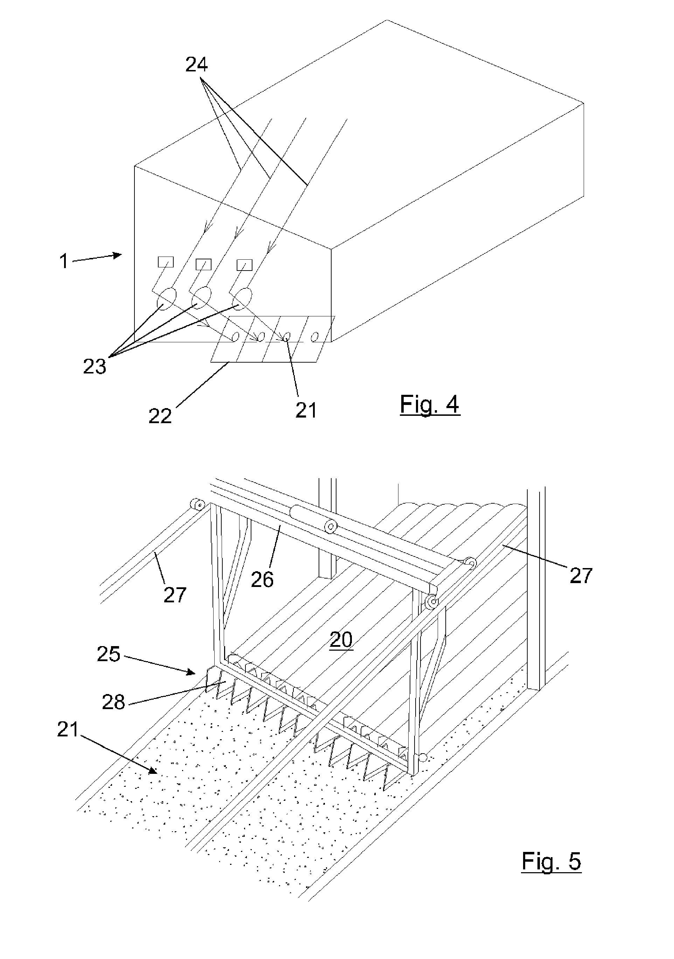

The dryer of the invention furthermore includes means for supplying hot air to the inside of the enclosure, these means being made up of a heating chamber 22 with transparent walls, which may be externally attached to one or more of the walls of the enclosure 1, as shown in figure 4. The heating means furthermore include a set of concave mirrors 23 oriented in such a way that they receive the sun's rays 24 and reflect them towards the heating chamber 22, through which air is made to circulate in order to heat the same, this air being introduced into the enclosure 1 through openings 24.

As shown in figure 5, means for stirring and mixing the product to be dried are arranged above the exposure surface 20, these means including at least one comb 25, which may be suspended from a bridge crane 26 that may move on beams 27 arranged along the length of the dryer enclosure 1. Each comb 25 includes a series of arms or trowels 28, which may be oriented collectively through a connecting rod 29 and crank 30 mechanism, as shown in figure 6, it being possible to actuate the same by means of any kind of system. Each one of the arms or trowels 28 will include at least a lower section 31 which is elastically flexible in nature, for example made of rubber, with the aim of preventing it from rubbing against the exposure surface 20 and wearing down said surface.

## Claims

1. An eco-sustainable dryer for agricultural products made up of an enclosure, which comprises a grain exposure surface, means for collecting solar radiation, means for supplying hot air to the inside of the enclosure and means for stirring and mixing the grain, **characterised in that** the means for collecting solar radiation consist of mirrored panels that define the inner surface of at least one of the walls of the dryer, these panels being mounted between upper and lower horizontal rails and may move along the length of the same, including sets of mirrors that may rotate about two perpendicular shafts contained on the plane of said mirrors, which facilitate the orientation thereof so as to achieve maximum capture of the sun's rays at all times, in addition to the reflection thereof towards the surface for exposing the product to be dried.

2. The dryer according to claim 1, **characterised in that** the mirrored panels cover the inner surface of three of the walls of the enclosure.

3. The dryer according to claim 1, **characterised in that** each panel is made up of one first outer frame, which is rectangular in shape, in which at least a second inner frame, which is also rectangular, is mounted, which bears the mirrors; said first inner frame being mounted between the upper and lower rails through rolling means; and said second inner frame being mounted in the first outer frame by means of a first rotation shaft parallel to one of the sides of the first outer frame; each mirror in turn being mounted in the second outer frame through a second rotation shaft perpendicular to said first rotation shaft.

4. The dryer according to claim 3, **characterised in that** two second inner rectangular parallel frames are mounted in each first outer frame by means of other several first rotation shafts parallel to one another.

5. The dryer according to previous claims, **characterised in that** each panel bears actuation mechanisms and interlocking means for the second inner frames and mirrors, in order to orientate the same on the corresponding rotation shafts and fix the same in a certain orientation.

6. The dryer according to claim 1, **characterised in that** the means for supplying hot air inside the enclosure comprise a heating chamber with transparent walls, a set of concave mirrors orientated such that they reflect the sun's rays towards the inside of the heating chamber and a piece of air supply equipment, capable of making air circulate through said chamber and driving it to the inside of the enclosure.

7. The dryer according to claim 1, **characterised in that** the means for stirring and mixing the cereal, upon the grain exposure surface, are made up of at least one comb located above the surface for exposing the product to be dried and may move along the length of the dryer, this comb bearing lower stirring arms or trowels which may be oriented and reach the edges of the exposure surface.

8. The dryer according to claim 7, **characterised in that** the stirring arms or trowels include at least one lower section of an elastically flexible nature.
